Europäisches Patentamt

European Patent Office

Office européen des brevets

(11) Publication number: 0 400 454 A2

# EUROPEAN PATENT APPLICATION

(21) Application number: 90109671.9

(22) Date of filing: 22.05.90

(51) Int. Cl.⁵: **C08K 5/00, C08K 13/02, C08K 9/12, //(C08K5/00,5:09, 5:524),(C08K13/02,3:22,5:524)**

(30) Priority: 31.05.89 US 359777

(43) Date of publication of application:
05.12.90 Bulletin 90/49

(84) Designated Contracting States:
DE FR GB IT NL

(71) Applicant: GENERAL ELECTRIC COMPANY
1 River Road
Schenectady New York 12305(US)

(72) Inventor: Enlow, William Palmer
Route 2, Box 11
Belpre Ohio 45714(US)
Inventor: Horn, William Edward, Jr.
2394 Rihnstrasse
Gibsonia Pennsylvania 15044(US)

(74) Representative: Catherine, Alain
General Electric France Service de Propriété
Industrielle 18 Rue Horace Vernet
F-92136 Issy-Les-Moulineaux Cedex(FR)

(54) Stabilized phosphite compositions.

(57) Polymer stabilizer compositions comprise an organophosphite compound and a metal soap, an alkali metal oxide or an alkali metal salt of an inorganic acid. Preferably the compositions contain 100 parts by weight of the organophosphite and from 50 to 200 parts by weight of the metal soap, alkali metal oxide or alkali metal salt, although the compositions may contain as low as 5% by weight of the metal soap, alkali metal oxide or alkali metal salt. The compositions may optionally contain an inert, finely divided, solid silica or silicate support in an amount of from 15 to 30 parts by weight.

EP 0 400 454 A2

## STABILIZED PHOSPHITE COMPOSITIONS

### Background of the Invention

This invention relates to polymer stabilizers, and more particularly to stabilizer compositions having improved handling characteristics and to a method for improving the handling characteristics and stability of phosphite resin stabilizers.

Organophosphite compounds, including aliphatic, cycloaliphatic and aryl phosphite compounds, have long been known and widely used as stabilizers for a wide variety of resins, as well as for lubricating oils and many other hydrocarbon-based materials. While such phosphites have achieved wide acceptance in these uses, most suffer from certain deficiencies which the industry has long sought to remedy. For example, most phosphites are sensitive to moisture, undergoing hydrolysis and loss in efficiency when exposed to moisture or stored in humid environments. Various proposals have been made for eliminating this problem, including coating or encapsulating stabilizer particles with inert waxes, using sealed packaging structures made with materials having moisture barrier properties and adding compounds, such as amines, that stabilize the phosphite toward hydrolysis to some extent. Adding very small amounts, generally less than 2 wt%, of a metal soap to certain phosphites is disclosed in US 4,402,858 to provide hydrolytically stable liquid compositions.

Many of the most widely used phosphite stabilizers are difficult to handle in compounding operations because they are liquids or waxy solids with low melting or softening points. Accurately measuring, mixing and thoroughly dispersing small quantities of such materials into large volumes of solid resins is very difficult. Handling problems are exacerbated when the stabilizer is a low melting, waxy solid because such materials tend to become sticky and slowly caking, often becoming solid blocks of stabilizer during storage. The waxy solids also tend to block the feed parts of processing equipment and stick to the working surfaces of equipment, requiring substantial efforts to maintain the equipment in a clean condition.

Methods for improving the handling characteristics of such materials and particularly of liquid phosphites have included adsorbing the phosphite onto finely-divided porous solids as powdery solids, are more readily handled. Typical of such compositions are those disclosed in Canadian patent 791,803, wherein liquid phosphites are adsorbed onto finely divided inert carrier materials such as metal silicates, clays or silicas. Solid carriers, however, may further contribute to the hydrolytic sensitivity of the phosphites. Moreover, the presence of significant quantities of powdered solids may affect clarity and frequently will impart an undesirable color to the stabilized resin. Any tendency of the stabilized resin toward yellowing or other color shift is universally regarded as an important performance deficiency by compounders and other users of phosphite stabilizers.

The compounding art is therefore in need of stabilizer compositions based on readily available, widely accepted phosphites having the handling characteristics of solid materials without exhibiting the hydrolytic instability and undesirable tendency toward yellowing and discoloration, which problems are characteristic of most products currently available in the art.

### Summary of the Invention

Compositions comprising 100 parts by weight of an organophosphite, and from 50 to 200 parts by weight of a metal soap or alkali metal oxide or alkali metal salt of an inorganic acid and, optionally, from 15 to 30 parts by weight of an inert, finely divided, solid silica or silicate support, have been found to exhibit good hydrolytic stability without significant tendency to discolor. Where the phosphite is a liquid or low-melting solid, the resulting compositions are solids with good flow characteristics. These solid compositions generally have better handling characteristics for use with a variety of compounding equipment, although only low shear equipment will be suitable for use in certain instances. The improved hydrolytic stability of these phosphite-containing composition surprisingly extends to the compounded olefin materials as well.

We have additionally discovered that blends containing higher melting phosphites, such as bis (2,4 di-t-butylphenyl) pentaerythritol diphosphite, have improved hydrolytic stability and improved performance in polymers. Such blends do not necessarily require the silica containing "support" and may need lesser amounts of the metal soap or alkali metal salt. However, the composition should contain at least 5% by weight (based on weight of total composition) of metal soap or alkali metal salt to achieve the desired effect.

## Detailed Description

The phosphites useful in forming the hydrolytically stable compositions according to the practice of this invention may be described generally as any of the organophosphite compounds ordinarily used to stabilize hydrocarbons, and particularly polyolefins. These phosphites include alkyl phosphites, alkylaryl phosphites, aryl phosphites and alkaryl phosphites as well as ordinary mixtures thereof. Of particular interest, because of their liquid or soft waxy characteristics at room temperatures, are the tris alkylphenyl phosphites such as tris nonylphenyl phosphite, alkylaryl phosphites such as octyl diphenyl phosphite and dialkyl pentaerythritol diphosphites such as distearyl pentaerythritol diphosphite and the like. The significant handling improvements may not be observed for higher melting phosphite products, such as bis (2,4 di-t-butylphenyl) pentaerythritol diphosphites. However, the resistance to humid environment may be significantly improved.

The inert solid compounds used as supports in the practice of this invention may be silica or a metal silicate such as calcium silicate, magnesium silicate, sodium aluminum silicate, and the like. These solids are readily available commercially as powders and in a variety of particle sizes, and any of these commercial materials are suitable for the purposes of this invention.

The metal soaps employed in preparing the compositions of this invention are the metal salts of fatty acids conventionally employed in plastics compounding, including alkali metal, alkaline earth metal, tin, lead, cadmium, zinc and zirconium salts of fatty acids, i.e. saturated and unsaturated aliphatic monocarboxylic acids such as stearic acid, palmitic acid and the like. The preferred soaps are calcium stearate, zinc stearate, magnesium stearate, cerium stearate and the like. Such soaps are generally employed with polyolefins. Hydrotalcites (magnesium aluminum carbonate compositions), calcium oxide, calcium carbonate, magnesium oxide, zinc oxide, trisodium phosphate and cadmium soaps, are also widely known and used as stabilizers for polyvinyl chloride and similar resins. These compositions have limited utility in hydrocarbons and polyolefins, and are not preferred in these applications.

The compositions of this invention will comprise 100 parts by weight of the phosphite, from 50 to 200 parts by weight of the metal soap, alkali metal oxide, or salts of inorganic acids and, optionally, from 15 to 30 parts by weight of the solid support when using low melting or liquid phosphites. The compositions may be prepared by any process that accomplishes a thorough and substantially uniform dispersion of the components and is carried out in a dry, inert environment, preferably under conditions that will remove minor amounts of moisture that may be present. Examples of such methods include dispersing the components in an inert solvent, thoroughly mixing the materials and forming a uniform slurry, then stripping out the solvent, preferably under vacuum, to obtain a powdered solid. Alternative methods include using a mixer of a fluidized bed design with high speed mixing and an inert gas flow to accomplish dispersion and particle formation.

When using higher melting phosphite products, the support may not be necessary to achieve a viable flowing product. Consequently, 100 parts of phosphite may be blended with 5-200 parts of soaps, oxides or salts, to obtain a product with increased moisture resistance. Solid products having reasonably good flow have been prepared by blending 46% trinonylphenyl phosphite (TNPP), 46% alkali metal composition and 8% substrate. The akali metal compositions found to be most satisfactory were calcium stearate, hydrotalcites, magnesium oxide, cerium stearate and calcium bis ethyl (3,5 di-t-butyl,4-hydroxybenzyl) phosphonate. Other alkali metal compositions tested with a comparable level of inertness were CaO, ZnO, stearate coated $CaCO_3$, Zn and Mg stearates, and trisodium phosphate. All of these gave solid products, but required higher loadings of inert substitutes in order to obtain good flow character. The inert substrates incorporated in blends have been diatomites such as CeliteR from Johns-Manville, Celatom® Fw-12 from Eagle Pitcher, calcium silicates such as Microcel E® from Johns-Manville, and fumed silicas from Cabot (Cabosil®) and Degussa (Aerosil®).

Other additives which might be expected to be stabilizers for polymer compositions were incorporated into the blend to determine whether or not usable products might be obtained. Additional blends having satisfactory flow were prepared by blending hindered phenolic antioxidants, UV absorbers, thiodipropionates, bis 2,4 di-t-butylphenyl pentaerythritol diphosphite with the TNPP, calcium stearate and fumed silica. These compositions included 31.25% TNPP, 31.25% calcium stearate, 31.25% other additive (as mentioned above) and 6.75% fumed silica. Additional compositions were prepared with 37% each TNPP and calcium stearate, 18% other additive, and 8% silica. The hindered phenolic antioxidants utilized were Irganox® 1076, Irganox® 1010 (both products of Ciba-Geigy) and Goodrite® 3114 (a product of B. F. Goodrich). Of course, other hindered phenolic antioxidants may be employed. The thiodipropionate tested was dilaurylthiodipropionate and the UV absorber was UV-531 (a product of American Cyanamid).

The invention will be better understood by consideration of the following examples, which are provided

3

by way of illustration only.

## Examples 1 & 2

With reference to Table I, TNPP was dissolved in an equal volume of acetone, mixed with the stated amount of calcium stearate and support (Microcel E), and then stripped under vacuum to a final pressure of 5mm at 60°C. The resulting mixtures were compounded by mixing with linear low density polyethylene (LLDPE) using an Impandex blender at a level of approximately 5 wt% phosphite, then extruded and pelletized with a 1″ Killion extruder at a stock temperature of 500°F, using a Maddox mixing screw and a single strand die.

Control Examples A and B were prepared by separately adding TNPP and calcium stearate to the LLDPE, then compounding and pelletizing the mixture.

Control Example C and D were prepared in the same manner as Examples 1 and 2, then compounded and pelletized.

The pelletized samples were exposed in a humidity chamber at 100°F and 88% relative humidity. The decrease in concentration of phosphite with hydrolysis was determined by FTIR analysis, and confirmed by observing the increase in phenolic-OH concentration.

The results, in terms of % loss in phosphite, are reported in Table I.

TABLE I

| EX. No. | TNPP pbw | Ca St. pbw | Support pbw | Initial Phos,wt% | Weeks Hydrolysis | | | | | |
|---|---|---|---|---|---|---|---|---|---|---|
| | | | | | 1 | 2 | 3 | 3 | 5 | 7 |
| | | | | | % Phosphite Remaining | | | | | |
| 1 | 100 | 100 | 17.5 | 5.6 | 98 | 82 | 82 | 86 | 84 | 86 |
| 2 | 100 | 200 | 17.5 | 5.3 | 100 | 100 | 96 | 98 | 96 | 96 |
| A | 100 | 100 | 0 | 5.0 | 98 | 0 | - | - | - | - |
| B | 100 | 0 | 0 | 5.5 | 98 | 94 | 38 | 0 | - | - |
| C | 100 | 0 | 42.9 | 3.8 | 84 | 84 | 84 | 66 | 61 | 61 |
| D | 100 | 0 | 50 | 4.2 | 71 | 76 | 76 | 60 | 55 | 55 |

As will be apparent from a consideration of the hydrolysis data presented in Table I, the stabilizing compositions of this invention are substantially improved in resistance to hydrolysis. The compositions of Examples 1 and 2, comprising a pre-formed combination of the phosphite, soap and a silicate support, had a reduced sensitivity to moisture even after being blended with polyethylene, melt-compounded and pelletized. Compounding polyethylene with phosphite alone (Control Example B) or with phosphite and large quantities of the metal soap taught in US 4,402,858 as useful for improving the hydrolysis resitance of phosphites (Control Example A), gave compositions highly sensitive to moisture. Further, combinations of phosphites with only silicate support, at the much higher levels taught by Canadian patent 791,803, gave only comparatively modest improvement in hydrolysis resistance, and caused some loss in phosphite during compounding as reflected by the values for initial level of phosphite in the polyethylene pellets (control Examples C and D).

## Examples 3 -6

Stabilizer compositions comprising phosphites with soap and silica or magnesium silicate were prepared by solvent blending, using the substantially the same methods described in connection with Examples 1 and 2. The solvent employed was heptane, and stripping was accomplished on a rotary evaporator using 80°C and 5mm pressure as the final temperature/pressure. The stabilizer compositions, as well as samples of the neat phosphites, were exposed to 80% relative humidity. Acid values of the composition were measured initially and after the humidity exposure to determine the degree of hydrolysis. The results for Examples 3-6 and the related Control Examples E-I are summarized in Table II.

4

TABLE II

| Ex. No. | pbw | Phosphite Type | Soap pbw Type | Support pbw Type | Acid No. Change over Time (hrs) | | | | |
|---|---|---|---|---|---|---|---|---|---|
| | | | | | Initial | No. (Hrs.) | | No.(Hrs. | |
| E | 100 | TNPP | 0 | 0 | 0.1 | 1.7 | ( 48) | 39.9 | (144) |
| F | 100 | TNPP | 0 | 17 Silica | 0.1 | 9.9 | ( 48) | 57 | (144) |
| 3 | 100 | TNPP | 100 CaStr | 17 MgSilicate | 0.2 | 2.3 | (192) | 5.9 | (312) |
| G | 100 | (Str)₃P | 0 | 0 | 0.5 | 5.4 | (160) | 27.7 | (352) |
| 4 | 100 | (Str)₃P | 100 CaStr | 17 MgSilicate | 0.4 | 0.8 | (160) | 3.4 | (400) |
| H | 100 | ODP | 0 | 0 | 0.2 | 0.7 | ( 24) | 65 | ( 48) |
| 5 | 100 | ODP | 100 CaStr | 17 MgSilicate | 0.3 | 2.2 | ( 48) | 9.2 | (168) |
| I | 100 | 624 | 0 | 0 | 1.3 | 6.6 | (192) | 29.6 | (312) |
| 6 | 100 | 624 | 100 CaStr | 17 MgSilicate | 0.8 | 5.2 | (216) | 17.1 | (312) |
| TNPP = Tri(nonylphenyl) phosphite | | | | | | | | | |
| ODP = Octyldiphenyl phosphite | | | | | | | | | |
| 624 = bis (2,4 di-tert butylphenyl) pentaerythritol diphosphite | | | | | | | | | |
| (Str)3P = Tristearylphosphite | | | | | | | | | |
| CaStr = Calcium Stearate | | | | | | | | | |
| MgSilicate = Magnesium silicate | | | | | | | | | |

The Acid Number (the number of milligrams of KOH required to neutralize one gram of the composition) is an indication of the degree that the tested product undergoes hydrolysis. As water is adsorbed, it will react to form one or more acids. It will, therefore, be apparent from the Acid Number data presented in Table II that the phosphite hydrolysis occurs only slowly when the stabilizer includes a combination of phosphite, calcium stearate and a low level of silicate as a support (Examples 3-6). Hydrolysis of the neat phosphite (Control Examples E, G, H and I) occurred under the same conditions. The presence of a low level of a silica support alone caused an increase in the rate of hydrolysis.

## Example 7

As a further demonstration of improved hydrolysis resistance, a stabilizer composition comprising distearyl pentaerythritol diphoshite (Weston®618 - GE Specialty Chemicals), calcium stearate and fumed silica was prepared substantially using the solvent blend process described for Examples 3-6. Portions of the resulting stabilizer composition were exposed to 80% relative humidity for varying times, compounded with Profax® 6501 polypropylene, and extruded repeatedly to determine the stabilizing ability of the composition. The melt index for the first and fifth passes were determined, as was the acid value for each of the stabilizer compositions before compounding. The results are summarized in Table III, together with the data for Control Examples J, using distearyl pentaerythritol diphosphite alone.

TABLE III

| Ex. No. | 618 pbw | CaStr pbw | Support pbw | Initial Melt Flow | | | 24 Hr. Hydrolysis Melt Flow | | |
|---|---|---|---|---|---|---|---|---|---|
| | | | | 1st Pass | 5th Pass | Acid Value | 1st Pass | 5th Pass | Acid Value |
| 7 | 100 | 100 | 17.5 | 3.9 | 5.4 | 0.7 | 4.1 | 6.3 | 12 |
| J | 100 | 100 | 0 | 3.6 | 4.5 | 0.7 | 4.5 | 13.3 | 34 |

It will be apparent from a comparison of acid values that the neat phosphite stabilizer of Control Example J underwent hydrolysis in 24 hours to a greater degree than did the composition of this invention, Example 7. Further, while the initial melt flow values (1st and 5th pass were substantially equivalent for the Example 7 and Control Example J, the 5th pass value for the control example was markedly worse than the Example 7 composition after exposing the stabilizer to 80% relative humidity for 24 hours.

To illustrate other preparative techniques, two blends were prepared using an Littleford Model DVT-130 fluidized bed mixer. This apparatus is capable of a wide variety of operating conditions: it may be heated or cooled, operated under vacuum or an inert atmosphere; and has variable speed mixing "plows" (0-200 rpm) and additional high shear mixing chopper (1800-3600 rpm).

## Example 8

The mixer was initially charged with thirty (30) pounds of calcium stearate and 6.7 lb. of Microcel E. The settings for the plow mixer and the chopper were respectively 155 and 1800 rpm. Thirty lbs. of TNPP were added over a three minuter period; total mixing time was five (5) minutes. A free flowing solid product resulted.

## Example 9

The following products were charged all at the same time to the mixer: 21.6 lbs. distearyl pentaerythritol diphosphite (Weston (R) 618- GE Specialty Chemicals); 21.6 lbs. calcium stearate; 3.8 lbs. fumed silica. Slight external heat was applied; plow mixer setting was 100 rpm- high speed chopper at 1800 rpm. All materials were blended for a total of seven minutes at which time the internal temperature reached 107 degrees F. A free flowing, solid product resulted.

The product from Example 9 was tested to determine how well it could be fed through the type of device commonly used to feed solid additives to an extruder. In the test, an Acrison auger type feeder was employed. As a control, a typical solid phosphite, distearyl pentaerythritol diphosphite (Weston® 618 ibid) was run at the same conditions while flow rates and general observations on how well the materials flowed were recorded. The results are set forth is Table IV.

Table IV

| Product | Temp. C | RPM | Rate g/min. | | Duration | Remarks |
|---|---|---|---|---|---|---|
| | | | Start | Finish | | |
| W-618 | 30 | 20 | 70 | 70 | | Fed well |
| W-618 | 40 | 20 | 83 | 84 | * | Marginal |
| Ex. 9 | 30 | 20 | 80 | 83 | 1.5 | Fed well |
| Ex. 9 | 40 | 20 | 94 | 90 | 1 | Fed well |

* Material built up on walls screw in very short time.

Note that the feed rates were higher for the supported product as compared with the W-618. This is made possible by the improved solid flow properties. A product with inferior flow cannot be consistently fed at high rates.

It was pointed out above that the support component is optional in the case of certain high performance phosphites. For example, when using bis (2,4-di-tert-butylphenyl) pentaerythritol diphosphite (Ultranox® 624- GE Specialty Chemicals), adequate performance can be achieved by the use of the hydrolysis stabilizers alone, i.e. without the addition of the supporting material. To illustrate this characteristic, samples were prepared using bis (2,4-di-t-butyl) pentaerythritol diphosphite (Ultranox 624) and: 1) a synthetic hydrotalcite- DHT4A from Kyowa Industries and 2) calcium stearate.

## Examples 10-14

A blend was prepared by mixing 10 pbw DHT4A with 90 pbw Ultranox 624 (Example 10); another with 50 pbw DHT4A with 50 pbw Ultranox 624 (Example 11); another with 90 pbw Ultranox 624 and 10 pbw calcium stearate (Example 12); another with 50 pbw Ultranox 624 and 50 pbw calcium stearate ( Example 13); and another with 75 pbw Ultranox 624 and 25 pbw calcium stearate (Example 14). All of the above materials were subjected to exposure at 28 degree C. and 80% relative humidity. The acid number was recorded after various time intervals as shown in Table V below.

TABLE V

| Example | Time | Acid Number |
|---------|------|-------------|
| 10 | 72 | 2 |
| - | 144 | 6 |
| - | 168 | 36 |
| 11 | 72 | 2 |
| - | 144 | 3 |
| - | 180 | 15.5 |
| 12 | 24 | 5 |
| - | 72 | 13 |
| - | 144 | 50 |
| 13 | 24 | 2 |
| - | 72 | 11 |
| - | 144 | 14.5 |
| 14 | 24 | 3 |
| - | 72 | 15 |
| - | 144 | 21 |

The data show that even without the support material, satisfactory stabilization against hydrolysis can be achieved.

While this invention has been described in connection with certain specific embodiments thereof, it should be construed as broadly as the prior art will permit within the scope of the appended claims.

**Claims**

1. A hydrolysis-resistant composition for stabilizing thermoplastic polymers comprising a mixture of 100 parts by weight of an organophosphite compound, from 50 to 200 parts by weight of a metal soap, an alkali metal oxide, an alkaline earth metal oxide or an alkali metal salt of an inorganic acid, and from 0 to 30 parts by weight of a powdered inert solid support.

2. The composition of Claim 1, comprising from 50 to 200 parts by weight of the metal soap.

3. The composition of Claim 2, wherein the metal soap comprises an alkaline earth metal soap.

4. The composition of claim 3, wherein the alkaline earth metal comprises calcium.

5. The composition of Claim 3, wherein the metal soap comprises an alkaline earth metal stearate.

6. The composition of Claim 5, wherein the metal soap comprises calcium stearate.

7. The composition of Claim 1 wherein the organophosphite compound is selected from the group consisting of alkylphosphites, arylphosphites, alkarylphosphites, alkyl-aryl phosphites, dialkyl pentaerythritol diphosphites, diaryl pentaerythritol diphosphites, dialkaryl pentaerythritol diphosphites, dialkylaryl pentaerythritol diphosphites and mixtures thereof.

8. The composition of claim 7, wherein the organophosphite compound comprises a dialkylphenyl pentaerythritol diphosphite.

9. The composition of Claim 8, wherein the organophosphite compound comprises bis(2,4-di-tert-butylphenyl) pentaerythritol diphosphite.

10. The composition of Claim 1, wherein said composition is free of the solid support.

11. The composition of claim 10, comprising from 50 to 200 parts by weight of a hydrotalcite.

12. The composition of Claim 10, comprising from 50 to 200 parts by weight of the metal soap.

13. The composition of Claim 12, wherein the metal soap comprises an alkaline earth metal stearate.

14. The composition of Claim 13, wherein the metal soap comprises calcium stearate.

15. The composition of claim 14, wherein the organophosphite compound comprises a dialkylphenyl pentaerythritol diphosphite.

16. The composition of Claim 15, wherein the organophosphite compound comprises bis(2,4-di-tert-butylphenyl) pentaerythritol diphosphite.

17. The composition of Claim 1, further including at least one additive selected from the group consisting of hindered phenolic antioxidants and thiodipropionates.

18. A thermoplastic molding composition comprising a polyolefin containing a stablizing amount of a hydrolysis-resistant composition consisting essentially of 100 parts by weight of an organophosphite compound, from 50 to 200 parts by weight of a metal soap, an alkali metal oxide, an alkaline earth metal oxide or an alkali metal salt of an inorganic acid, and from 0 to 30 parts by weight of a powdered inert solid support.

19. A method of preparing a hydrolysis-resistant composition for stabilizing thermoplastic polymers, comprising dissolving 100 parts by weight of an organophosphite compound in an organic solvent, mixing the dissolved organophosphite compound with 50 to 200 parts by weight of a metal soap, an alkali metal oxide or an alkali metal salt of an inorganic acid and 0 to 30 parts by weight of a powdered inert solid support, and vacuum stripping the solvent therefrom.

20. A method of preparing a hydrolysis-resistant composition for stabilizing thermoplastic polymers, comprising mixing 100 parts by weight of an organophosphite compound, 50 to 200 parts by weight of a metal soap, an alkali metal oxide or an alkali metal salt of an inorganic acid and 0 to 30 parts by weight of a powdered inert solid support in a fluidized bed mixer.